# EUROPEAN PATENT SPECIFICATION

(11) **EP 0 493 024 B1**
(45) Date of publication and mention of the grant of the patent: **19.10.1994**
(21) Application number: 91311875.8
(22) Date of filing: 20.12.1991
(51) Int. Cl.: C10G 71/04, B01J 27/32, C07C 2/20, B01D 3/10, F04C 19/00

(54) **A method for recovering a gaseous boron trifluoride and the use of the product formed in the method**
Verfahren zur Rückgewinnung von gasförmigem Bortrifluorid und Verwendung des derart hergestellten Erzeugnisses
Procédé de récupération de trifluorure de bore gazeuse et utilisation du produit obtenu

(30) Priority: 21.12.1990 FI 906352
(43) Date of publication of application: 01.07.1992
(73) Proprietor: NESTE ALFA OY, SF-02151 Espoo (FI)
(72) Inventor: Nurminen, Matti, SF-06100 Porvoo (FI); Nissfolk, Fredrik, SF-06450 Porvoo (FI); Linnaila, Raimo, SF-06150 Porvoo (FI); Happonen, Vesa-Matti, SF-06100 Porvoo (FI)
(74) Representative: Lamb, John Baxter

(56) References cited:
- EP-A- 0 318 186
- FR-A- 2 197 837
- US-A- 2 148 115
- US-A- 4 263 467

## Description

The invention relates to recovering a gaseous boron trifluoride, BF₃, from the exhaust gases of an underpressure distillation. The invention also relates to the use of a product formed in the method.

More especially the invention relates to the removal of a gaseous boron trifluoride from the exhaust gases of a vacuum pump when polymerising α-olefins by using a boron trifluoride/alcohol complex as a catalyst.

It is known to prepare poly-α-olefins, which can be used e.g. as lubricants or as components thereof, by using, as catalyst, a complex of BF₃ and a cocatalyst, as described e.g. in US-A-3,780,128 and US-A-4,434,309. A catalyst complex is separated by distillation from the poly-α-olefins obtained as a reaction product, and it can be reused for catalysing a similar polymerization reaction (see EP-A-0318186).

When separating the catalyst complex from the reaction product by distillation, a small portion (less than 10%) of this complex decomposes and the gaseous BF₃ is released and causes a chemical loss, and as a result this compound, which is hazardous to the environment, has to be recovered e.g. by means of a washer.

For avoiding the decomposition of the catalyst complex, the distillation is performed under reduced pressure and thereby at a lower temperature. The underpressure can be achieved by means of a fluid ring pump or an ejector pump. Usually, the fluid ring pump, which can be a piston pump, a centrifugal pump, etc., is sealed with a fluid ring, wherein the fluid is water or an inert fluid with respect to the gases to be removed. The efficiency of the fluid-ring and/or ejector pump may be further increased by placing a mechanical blaster or booster (e.g. a rotary piston pump) in series with said pump. The use of fluid ring pumps in the recovery of phosgene is disclosed in FR-A-2197387.

The present invention relates to a method, by means of which the decomposition of the catalyst complex, i.e. the release of the boron trifluoride BF₃, may be further reduced or totally prevented.

According to the invention there is provided a method for recovering a gaseous boron trifluoride, BF₃, from the exhaust gases of an underpressure distillation of the mixture formed by the catalyst and products of the polymerization of α-olefins in the presence of a BF₃-alcohol complex catalyst, characterized in that the underpressure is caused either by a fluid ring pump or by an ejector pump, wherein the fluid ring or, correspondingly, the fluid jet is achieved by means of a complex formed by a liquid BF₃ and a C₁-C₁₅ alcohol, and wherein BF₃ is recovered as complex.

During the distillation, to reduce the pressure there is used either a fluid ring pump, wherein the fluid ring is formed by a C₁-C₁₅ alcohol to be used as a cocatalyst of a catalytic BF₃ and forming a complex with BF₃, which alcohol is preferably a relatively short-chained monoalcohol, e.g. butanol, or an ejector pump can be used as a pressure- reducing pump, in which the fluid moment, i.e. in practice the fluid jet, is formed by the fluid jet of said cocatalyst.

The BF₃-alcohol complex forming as a product of the method can be reused as a catalyst, preferably when polymerizing α-olefins.

The pressure range, in which the pump can be used, essentially depends on the requirements related to the distillation. The absolute pressure is usually less than 50 kpa, even 1 kpa. However, the pressure is not a limiting factor, since the method can be used always when it is desirable to pump gases with a fluid ring pump and/or a pump of an ejector type, possibly assisted by a mechanical booster, in which the gas and the fluid can be intimately mixed with each other. The temperature to be used during the pumping depends on the boiling point (the steam pressure) of the selected alcohol and the cooling mode. The temperature range is generally 20-60°C, whereby either water or air cooling, or both together, can be used.

In the fluid ring pump, when the cocatalyst is the substance forming the fluid ring or the substance to be jetted in the fluid jet, the complex between the catalyst, i.e. BF₃, and the cocatalyst forms immediately when these materials come into contact with each other in the underpressure pump, and the complex formed can be recovered, returned to a reactor and reused as polymerization catalyst. BF₃ and the alcohol, which have come into contact with each other, form a complex in such a way that all BF₃ to be removed binds to the alcohol, whereby the loss and emission of the catalyst into the surrounding atmosphere is totally avoided.

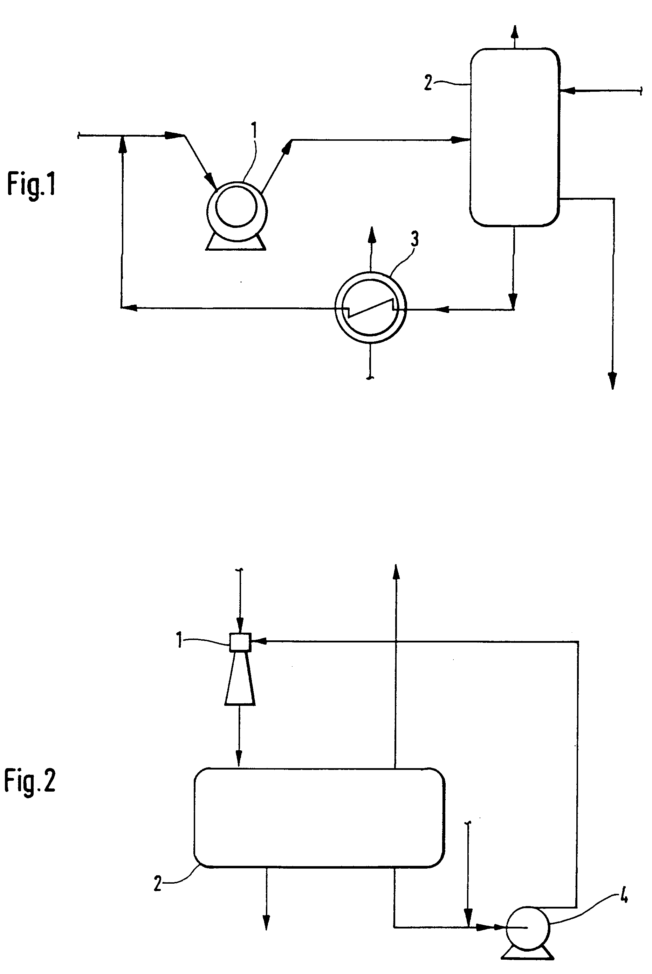

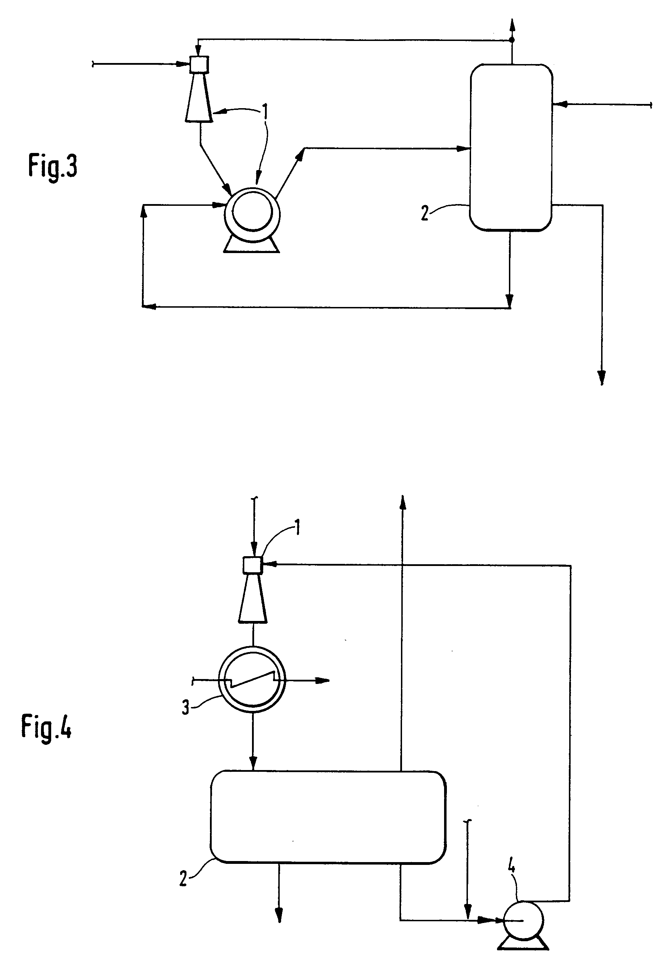

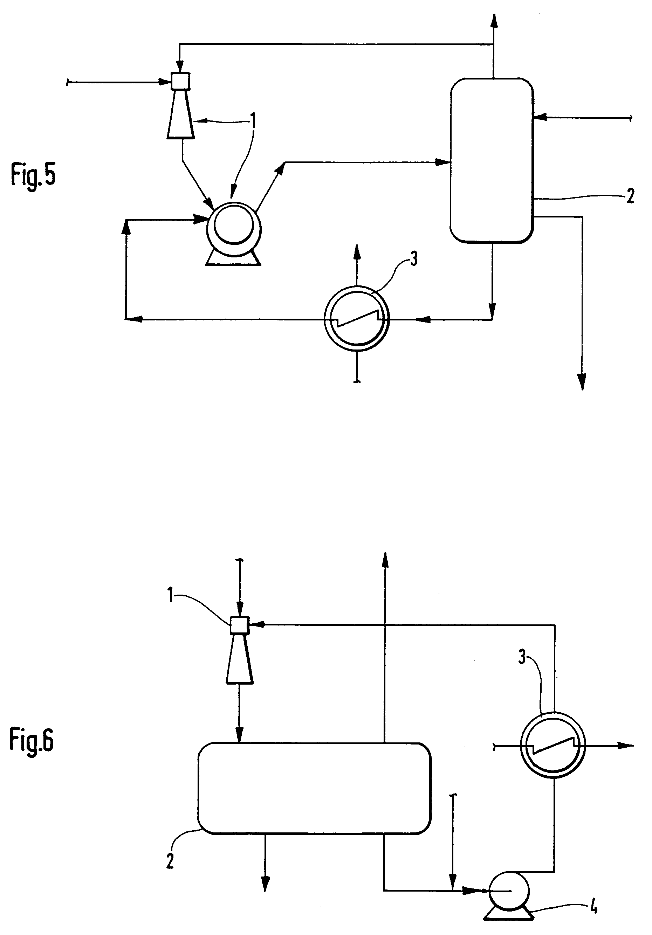

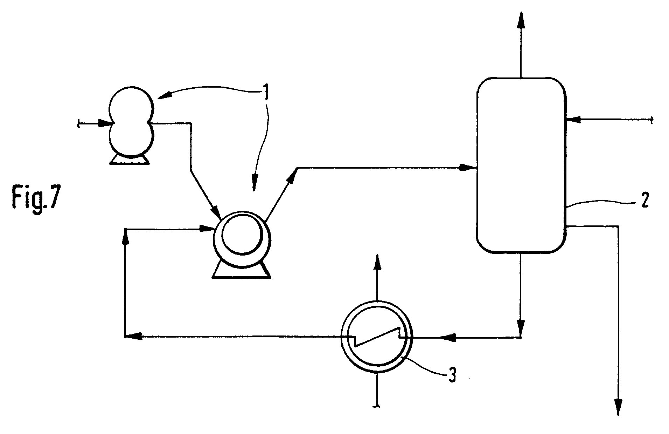

Fig. 1-7 show different equipment arrangements, to which the invention can be applied. When separating the catalyst complex from the reaction product, the gaseous components or vacuum gases separating therefrom enter the fluid ring pump or the ejector pump 1 (possibly assisted by a mechanical blaster, e.g. a rotary piston pump), by means of which they are pumped into a separating container 2, from which the pure gases, i.e. those not containing the catalyst, the recovered catalyst complex and the mixture to be circulated leave,which mixture is returned to the pump possibly in a cooled state by means of a heat exchanger 3, or the cooling can also occur after the pump, as shown in Fig. 4. If the pump for the vacuum gases is a torque pump, a separate propellant circulating pump 4 is needed, as shown in Fig. 2, 4 and 6. The alcohol forming a complex with BF₃ and forming the fluid ring of the pump or forming the fluid jet of the ejector pump is added either to the separating container 2, as shown in Fig. 1, 3 and 5, or just before the separate propellant circulating pump 4, as shown in Fig. 2, 4 and 6. It is possible to use several pumps, when so desired, and as an example as shown in Fig. 3 an arrangement of an ejector and fluid ring pump placed in series. Fig. 7 shows the use of a booster, e.g. a propellant circulating pump, in series with a fluid ring pump.

## Claims

1. A method for recovering a gaseous boron trifluoride, BF₃, from the exhaust gases of an underpressure distillation of the mixture formed by the catalyst and products of the polymerization of α-olefins in the presence of a BF₃-alcohol complex catalyst, characterized in that the underpressure is caused either by a fluid ring pump or by an ejector pump, wherein the fluid ring or, correspondingly, the fluid jet is achieved by means of a complex formed by a liquid BF₃ and a C₁-C₁₅ alcohol, and wherein BF₃ is recovered as complex.

2. A method according to Claim 1, characterized in that the alcohol forming the complex is a C₁-C₁₀ alcohol containing a hydroxyl group.

3. A method according to Claim 2, characterized in that the alcohol is butanol.

4. A method according to any one of the preceding claims characterized in that the BF₃-alcohol complex formed as product is used as a catalyst when polymerizing α-olefins.

## Patentansprüche

1. Verfahren zur Rückgewinnung von gasförmigem Bortrifluorid, BF₃, aus den Abgasen einer Unterdruckdestillation der Mischung, die durch den Katalysator und die Produkte der Polymerisation von α-Olefinen in Gegenwart eines BF₃-Alkohol-Komplexkatalysators gebildet wird, dadurch gekennzeichnet, daß der Unterdruck entweder durch eine Flüssigkeitsringpumpe oder durch eine Saugstrahlpumpe hervorgerufen wird, bei der der Flüssigkeitsring oder dementsprechend der Flüssigkeitsstrahl mittels eines Komplexes bewirkt wird, der durch flüssiges BF₃ und einen C₁-C₁₅-Alkohol gebildet wird, und wobei das BF₃ als Komplex zurückgewonnen wird.

2. Verfahren nach Anspruch 1, dadurch gekennzeichnet, daß der Alkohol, der den Komplex bildet, ein C₁-C₁₀-Alkohol ist, der eine Hydroxylgruppe enthält.

3. Verfahren nach Anspruch 2, dadurch gekennzeichnet, daß der Alkohol Butanol ist.

4. Verfahren nach einem der vorhergehenden Ansprüche, dadurch gekennzeichnet, daß der BF₃-Alkohol-Komplex, der als Produkt gebildet wird, als Katalysator verwendet wird, wenn α-Olefine polymerisiert werden.

## Revendications

1. Procédé pour la récupération de trifluorure de bore gazeux, BF₃, des gaz d'échappement d'une distillation en sous-pression du mélange formé par le catalyseur et les produits de la polymérisation d'α-oléfines en présence d'un complexe BF₃-alcool comme catalyseur, caractérisé en ce que la souspression est causée soit par une pompe à anneau liquide soit par une pompe à éjecteur, dans lequel l'anneau liquide ou, d'une manière correspondante, le jet de fluide est obtenu à l'aide d'un complexe formé par du BF₃ liquide et un alcool en C₁-C₅ et dans lequel le BF₃ est recueilli sous la forme d'un complexe.

2. Procédé selon la revendication 1, caractérisé en ce que l'alcool formant le complexe est un alcool en C₁-C₁₀ contenant un groupe hydroxyle.

3. Procédé selon la revendication 2, caractérisé en ce que l'alcool est le butanol.

4. Procédé selon l'une quelconque des revendications précédentes caractérisé en ce que le complexe BF₃-alcool formé comme produit est utilisé comme catalyseur lors de la polymérisation d'α-oléfines.
